# FASCICULE DE BREVET EUROPEEN

(11) **EP 0 406 124 B1**
(45) Date de publication et mention de la délivrance du brevet: **24.11.1999**
(21) Numéro de dépôt: 90401899.1
(22) Date de dépôt: 29.06.1990
(51) Int. Cl.: C08F 220/58, C07B 53/00

(54) **Polymères chiraux pour la synthèse d'aminoacides énantiomériquement purs**
Chirale Polymere zur Synthese von enantiomerisch reinen Aminosäuren
Chiral polymers for the synthesis of enantiomerically pure amino-acids

(30) Priorité: 29.06.1989 FR 8908679
(43) Date de publication de la demande: 02.01.1991
(73) Titulaire: RHODIA CHIMIE, 92408 Courbevoie Cédex (FR)
(72) Inventeur: Jacquier, Robert, F-34000 Montpellier (FR); Calmes, Monique, F-34000 Montpellier (FR); Daunis, Jacques, F-34000 Montpellier (FR)
(74) Mandataire: Ricalens, François

(56) Documents cités:
- EP-A- 0 300 448
- FR-A- 2 515 645
- TETRAHEDRON LETTERS, vol. 27, no. 36, 1986, pages 4303-4306, Pergamon Journals Ltd, GB; M. CALMES et al.: "Polyacrylic crosslinked resins with pendant chirality as auxiliary in supported asymmetric synthesis"

## Description

La présente invention est relative à des polymères chiraux permettant la synthèse asymétrique sur support d'acides aminés ainsi qu'à de nouveaux procédés de synthèse d'acides ami nés énantiomériquement purs.

Il existe peu d'exemples dans l'Art antérieur de synthèses asymétriques supportées sur polymère. Leur principe reste le même qu'en solution, nécessitant la présence d'un auxiliaire chiral à proximité du centre prochiral. Utilisant dans tous les cas des supports polystyréniques, ces exemples concernant les synthèses asymétriques d' -hydroxyacides (KAWANA et EMOTO, Bull. Chem. So. Japan, 1974, 47, 160), d'esters arylaliphatiques (Mc MANUS ET COLL., J. Org. Chem., 1981, 46, 3097) et de la méthyl-2 cyclohexanone (LEZNOFF et coll., Canad. J. Chem., 1982, 60, 1836 ; FRECHET et coll., Reactive Polymers, 1983, 1, 227). Toutefois, si l'on excepte le travail de LEZNOFF et coll. (Loc. cit.), les excès énantiomériques restent moyens (56-62 %). Enfin LEZNOFF et coll. (Canad. J. Chem., 1982, 60, 2984) ont réalisé la protonation asymétrique de la lithio-énamine de la méthyl-2 cyclohexanone racémique ancrée sur le bras chiral d'un polystyrène.

Une autre stratégie consiste à utiliser un support polyacrylique chiral provoquant une induction asymétrique supramoléculaire (CALMES, DAUNIS, JACQUIER, NKUSI, VERDUCCI et VIALLEFONT, Tetrahedron Letters, 1986, 27, 4303).

Toutefois, lorsque cette stratégie est appliquée à la synthèse d'acides aminés, il est nécessaire d'opérer à très basse température (- 78°C).

Dans ces conditions, lors de la synthèse d'aminoacides, les excès énantiomériques n'ont pas dépassé 63 % dans des alkylations d'énolates réalisées à - 78°C.

C'est pourquoi un des buts de la présente invention est de fournir une famille de polymères qui puissent être utilisés pour deracemiser ou passer d'un enantiomère à l'autre.

C'est pourquoi un des buts de la présente invention est de fournir un procédé de synthèse ou de déracemisation utilisant les polymères ci-dessus

La présente invention a pour objet un polymère, pouvant notamment être obtenu par copolymérisation radicalaire d'un monomère ou d'un oligomère ou d'un prépolymère chirale, d'un agent de fontionnalisation, et de préférence d'un agent de réticulation, caractérisé en ce qu'il comporte :
- un motif chiral
- un motif de fonctionnalisation
- un motif optionnel de réticulation
comme revendiqué dans la revendication 1.

Des représentations preferées de l'invention se trouvent dans les revendications dépendantes.

Le motif chiral représente, exprimé en mole, un pourcentage important qui varie selon les caractéristiques chimiques du motif chiral. Lorsque le motif chiral ne présente pas des sites susceptibles de faire des liaisons d'hydrogène intramoléculaires avec un autre motif chiral, il est souhaitable que le motif chiral représente au moins 2/3 avantageusement 70% de la totalité des motifs, de préférence 3/4. Lorsque le motif chiral présente des sites susceptibles de former des liaisons hydrogènes entre deux motifs chiraux, le pourcentage peut être significativement inférieur. Il est toutefois préférable que au moins 1/2 de préférence 2/3 des motifs soient chiraux.

Quoique l'on puisse envisager des motifs obtenus par polycondensation tels que par exemple un motif amide comme dans les polyamides ou un motif ester comme dans les poly esters, le motif chiral le plus adapté est un motif pouvant être obtenu par polymérisation de monomères chiraux présentant une insaturation.

Les monomères chiraux peuvent être obtenus par greffage de groupe porteur d'insaturation sur des groupes chiraux ; à titre d'enseignement par l'exemple on peut citer :
- Les monomères obtenus par amidification ou esterification des acides acryliques, éventuellement substitués, au moyen de molécules optiquement actives dont avantageusement le carbone asymetrique est bien dégagé comme dans le cas où le carbone actif est engagé dans un cycle.

L'accrochage des dérivés chiraux avec le radical acrylique peut être réalisé au moyen d'une fonction amide (par exemple avec les acides aminés ou leurs dérivés tels que par exemple les amides et les esters) ou d'une fonction ester. Il peut également être réalisé par toute technique connue de l'homme de métier, par exemple on peut greffer des groupements vinyliques sur les noyaux aromatiques des dérivés chiraux qui en possèdent tels que par exemple les dérivés de la phénylalanine du tryptophane, et les dérivés d'adrénaline et équivalents.

Le monomère chiral peut également être obtenu par des systèmes d'accrochages réciproques, tels que par exemple la fabrication d'esters d'énol à partir d'acides optiquement actifs tels que les acides aminés ou d'éther d'énol à partir d'alcool présentant un groupement acitf. Il est également possible d'utiliser des composés présentant des carbones asymétriques et une double liaison polymérisable, après éventuel dédoublement optique.

Il est préférable que dans le monomère chiral engendrant le motif chiral, la double liaison soit proche du carbone asymétrique, plus spécifiquement il est préférable que le nombre d'atomes entre la double liaison et le centre chiral soit au plus égal à 5, de préférence à 3 au mieux à 2.

Par ailleurs, le motif chiral présente avantageusement au moins une fonction porteuse d'hydrogène susceptible de former des liaisons hydrogènes avec un autre motif chiral de même nature. Parmi les fonctions on peut citer les fonctions acides, les fonctions alcools y compris les phénols, les fonctions amides, les fonctions amines.

Parmi les motifs chiraux usuellements employés, on peut citer à titre d'exemples les acrylamides, éventuellement substituées sous le groupe acryle formés à partir des amines suivantes :
- le prolinol, et éventuellement ses dérivés sous forme d'esters ou d'éthers de la fonction alcool,
- les amino-1-phényl-1-éthane notamment le N-méthyl-amino-1-phényl-1-éthane,
- le N-alkyle-amino-1 alcoxy-2 propane dans lesquels les groupements alkyles ou alcoxy peuvent représenter des alkyles linéaires ou ramifiés de préférence un méthyl ou un hydrogène,
- la pyrolidin-1-yl-2-méthyl-pyrolidine,
- l'amino-1 alkyle-1 hydroxy-2 éthane et ses dérivés de mono ou di méthylation sur l'azote et sur l'alcool. Le dérivé di substitué sur l'azote étant bien sûr exclus car non susceptible de former une liaison amide avec le groupement acroyle (toutefois il pourrait être utilisé si on utilise comme monomère chiral un ester acrylique).

D'une manière générale, il est préférable que le monomère chiral engendrant le motif chiral soit de faible poids moléculaire, c'est à dire avantageusement au plus égal à 200, de préférence au plus égal à 150 environ.

Le motif de fonctionnalisation peut être tout motif portant des fonctions de protection telles que définies dans les ouvrages bien connus de l'homme de métier tel que l'ouvrage de Théodora W.Greene "Protective Groups in Organic Synthesis" publié par John WILLEY and SONS, 1981, et celui de J.F.W. McOmie, "Protective Groups in Organic Chemistry" publié par PLENUM PRESS, LONDON AND NEW YORK, 1973.

Les groupes protecteurs peuvent être transformés en monomères donnant des motifs de fonctionnalisation de la même manière, mutatis mutandis que dans le cas des monomères et des motifs chiraux. Ainsi on peut utiliser comme monomère engendrant les motifs de fonctionnalisation des groupements anilides transformés en acrylanilides portant les dits groupements protecteurs tels que définis ci-dessus. Parmi les groupement protecteurs donnant les meilleurs résultats, on peut citer les dérivés des amino benzaldéhydes qui sont particulièrement utiles lors de la synthèse ou de la déracémisation des dérivés aminés (primaires) tels que les acides aminés.

On peut citer les dérivés acryloylés (y compris méthacryoylés) les dérivés issus de l'amidification par les acides acryliques des dérivés suivants :

CH₃-NH-C(R₁) (R₂)-CHO

avec R₁ ou R₂ aryle ou aralkyle.

On peut également imaginer que les motifs de fonctionnalisation sont des motifs issus de la polymérisation de motifs chiraux du type précédent mais sur lesquels aurant été greffée la fonction de protection envisagée.

Il est très hautement préférable que le polymère selon la présente invention comporte également des motifs de réticulation. Ces motifs de réticulation sont issus de monomères portant en général 2 insaturations. Ces monomères sont bien connus de l'homme de métier dans le domaine des polymères. On peut notamment utiliser des di esters ou des di amides des acides acryliques obtenus par action de réactifs acroylisants sur des di alcools ou des di amides.

Les différents monomères sont choisis selon des techniques bien connus de l'homme de métier de manière à être compatibles en vue d'une polymérisation harmonieuse. La polymérisation n'est pas le seul critère, il convient également que les monomères n'intéragissent pas entre eux du point de vue chimique. Le pourcentage en moles de l'agent de réticulation est avantageusement compris entre 0 et 20 % du motif chiral, de préférence de 5 à 15. Le motif de fonctionnalisation constituant le reste de ce polymère chiral fonctionnalisé.

Des séquences de monomère chiral peuvent être insérées dans un polymère non chiral.

Les différents monomères sont choisis de telle manière que les rapports massiques, compatibles avec les rapports molaires donnés précédemment, soient avantageusement compris entre 50 et 65 % pour le motif chiral, entre 5 et 15 % en poids pour le motif de réticulation, entre 40 à 25 % pour le motif de fonctionnalisation.

La synthèse des polymères selon la présente invention est faite selon des techniques bien connues de l'homme de métier. On peut prendre comme paradigme celles qui font l'objet des exemples 1 à 3.

Les polymères chiraux selon la présente invention permettent la synthèse asymétrique, la déracémisation et l'inversion optique. L'isomère optique obtenu dépend du choix de la forme R ou S du monomère chiral.

Dans la suite de la description, on utilisera les réactions de synthèse asymétrique et d'inversion optique sur les acides aminés comme paradigme de ce qui est possible de réaliser grâce au monomère selon la présente invention. En effet les synthèses décrites ci-après sont bien connues de l'homme de l'art et ont été maintes fois décrites et exemplifiées dans la littérature scientifique. L'invention consistant à réaliser les réactions de synthèse d'inversion ou de racémisation sur le polymère selon tel que décrit plus haut, ce qui permet d'obtenir des composés optiquement actifs purs et permet de déracémiser ou d'inverser selon des techniques qui usuellement permettent de racémiser.

La présente invention a en outre pour objet un procédé de synthèse asymétrique, sur support, d'acides aminés à partir d'un dérivé prochiral de formule générale : 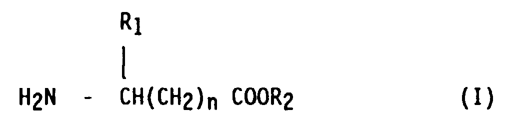 dans lequel n est égal à 0 ou 1.
R₁ représente un atome d'hydrogène, un groupe alkyle ou aralkyle, et
R₂ représente un groupe alkyle en C₁ à C₅, linéaire ou ramifié ou un groupe aryle,
lequel dérivé est réversiblement ancré, par exemple par formation d'une base de Schiff sur un polymère chiral fonctionnalisé par un aldéhyde ou équivalent, caractérisé en ce que :
- dans une première étape, le dérivé lié au polymère chiral est déprotoné par une base forte dans un solvant de préférence aprotique, de préférence polaire, tel que par exemple le tétrahydrofuranne ;
- dans une deuxième étape, on procède soit à l'alkylation soit à la protonation du dérivé déprotoné lié au polymère chiral, de façon à créer ou recréer un carbone asymétrique sur ledit dérivé, et,
- dans une troisième étape, on hydrolyse la base de Schiff pour obtenir un acide ami né de formule générale :

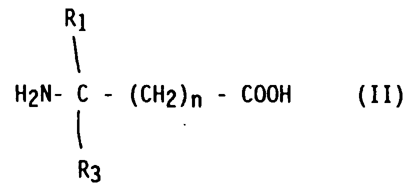

où R₁ et n sont tels que définis plus haut, et
R₃ représente un groupe alkyle ou aralkyle,
R₁ et R₃ devant être différents.

Comme base forte, on peut citer les amidures tels que le diisopropyleamidure de lithium ou le tétraméthylpipéridure de lithium, le sel de lithium de l'hexaméthyldisilazane, les anions dérivés des alcanes tels que le butyllithium et les alcoolates tels que le tertiobutylate de potassium. Cette liste n'est pas exhaustive.

Selon un mode de mise en oeuvre préféré du procédé conforme à la présente invention, on procède à la protonation du dérivé déprotoné lié au polymère chiral, par addition d'eau, d'un alcool ou d'un acide minéral ou organique.

Selon un mode de mise en oeuvre préféré du procédé conforme à la présente invention, on procède à l'alkylation du dérivé déprotoné lié au polymère chiral, par un halogénure de formule générale R₃ X, où X représente Cl, Br, ou I, et R₃ est tel que défini plus haut. R₃ peut être également un groupe fonctionnalisé du type
Z-(CH₂)ₙ-
dans lequel n = 1 à 4
Z = I, CN, CO₂R⁴ (R⁴ = alkyle), OR⁵ (R⁵ = CH₃ tosyle, tétrahydropyranyle),
Y - NH (Y = benzyloxycarbonyle, t-butyloxycarbonyls), R⁴ S,

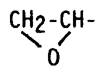

Le dérivé déprotoné lié au polymère chiral peut également réagir :
- dans des réactions d'aldolisation et de cétolisation avec R⁶ CHO (R⁶ = alkyle, aryle ou aralkyle) et avec des cétones aliphatiques ou arylaliphatiques,
- dans des réactions d'addition-1-4, avec des esters acryliques, l'acrylonitrile ou l'acroléine.

Selon une disposition particulièrement avantageuse de ce mode de mise en oeuvre préféré du procédé selon la présente invention, on fait réagir le dérivé déprotoné lié au polymère chiral avec l'halogénure R₃ X, pendant 1h à 4h.

Pour obtenir par le procédé selon la présente invention, l'un ou l'autre des deux énantiomères d'un acide aminé, avec un excès énantiomérique supérieur à 95 %, on choisit, suivant l'énantiomère souhaité, le polymère chiral contenant l'un des deux isomères R ou S du N-acryloyl prolinol.

En outre, grâce à l'emploi d'un polymère de support dont la maille chirale est le N-acryloyl prolinol, il est possible d'équilibrer les énolates intermédiaires sans qu'il soit nécessaire d'opérer à basse température.

Il en résulte que, contrairement aux procédés décrits dans l'art antérieur qui ne peuvent être réalisés qu'à des températures très basses, de l'ordre de - 70 à - 80° C, le procédé selon la présente invention peut être entièrement réalisé à température ambiante, et qu'il est même possible, de façon surprenante, d'en améliorer le résultat par une étape de chauffage à température modérée, de l'ordre de 60 à 70°C.

Selon un mode de mise en oeuvre préféré du procédé conforme à la présente invention, la synthèse asymétrique d'acides aminés sur support est effectuée à une température supérieure à 0° C.

Selon un autre mode de mise en oeuvre préféré du procédé selon la présente invention, le dérivé lié au polymère est chauffé à température de reflux du tétrahydrofuranne (67° C), à la fin de la première étape, pendant une durée de 15 mn à 4 h.

Outre les dispositions qui précèdent, l'invention comprend encore d'autres dispositions, qui ressortiront de la description qui va suivre.

La présente invention sera mieux comprise à l'aide du complément de description ci-après, qui se réfère à des exemples de préparation du polymère chiral de support, et à des exemples de mise en oeuvre du procédé de synthèse asymétrique d'acides aminés selon la présente invention.

Les excès énantiomériques (ee) sont déterminés soit par mesure des pouvoirs rotatoires, soit préférentiellement en utilisant le réactif de Marfey (Carlsberg Res. Comm., 1984, 49, 591) qui permet la séparation des diastéréoisomères par HPLC en phase inverse avec une excellente précision.

### I - PREPARATION D'UN POLYMERE CHIRAL DE SUPPORT

### Exemple 1

Dans 30 ml de tétrahydrofuranne, on ajoute 10,1 g (0,065 mole) de N-acryloyl (R) ou (S) prolinol, 1,3 g de bis-acryloyl N,N'-diméthyléthylènediamine et 3,6 g (0,019 mole) de N-acryloyl-N-méthyl-p-aminobenzaldéhyde, puis 1,5 g d'azoisobutyro-nitrile. On chauffe 1 h à reflux, refroidit à la température ambiante et filtre. On lave avec successivement EtOH + 10 % d'éther et avec CH₂Cl₂ + 10 % d'éther. Le résidu est mis en suspension dans 50 ml d'éther et les morceaux sont désagrégés avec une spatule. On filtre et sèche sous vide sur P₂O₅ à la température ambiante. On tamise entre 0,08 g et 0,2 mm. Rendement 90-95 %.

La charge, mesurée par oximation, est de 1,1 meq CHO par gramme.

### Exemple 2

Les mêmes quantités des trois monomères utilisées dans l'exemple 1 sont dissoutes dans un mélange 1 : 1 d'alcool et d'eau. Après dégazage au sonicateur, on fait barboter un courant d'azote durant 15 mn. On ajoute alors une solution de 0,3 g de persulfate d'ammonium dans 1 ml d'eau, puis après homogénéisation 0,3 ml de tétraméthyléthylènediamine. On homogénéise et, après quelques minutes, la température s'élève de 4 à 7° C.
On abandonne 1 h, filtre, lave à l'acétone et à l'alcool. On met la résine en suspension dans l'éther et opère comme dans l'exemple 1. Rendement 90-95 % après tamisage. Charge identique à celle de l'exemple 1.

### Exemple 3

Dans l'huile de paraffine (400 ml) et du SPAN 85 Fluka (0,3 ml) sont introduits dans un réacteur cylindrique de 2 l muni d'un agitateur et d'une arrivée d'azote. On fait barboter un fort courant d'azote durant 30 minutes avant l'introduction de N-acryloyl (R) ou (S) prolinol (0,12 mole), de bis-acryloyl N, N'-diméthyléthylènediamine (0,013 mole) et de N-acryloyl N-méthyl p-aminobenzaldéhyde (0,035 mole) dilués dans l'eau (110 ml) et l'éthanol ou le diméthylformamide (110 ml). Le mélange est agité sous un lent courant d'azote et la vitesse d'agitation est réglée jusqu'à ce que les gouttes en suspension atteignent un diamètre voisin de 0,1 mm. On ajoute alors une solution de 0,5 g de persulfate d'ammonium dans 1 ml d'eau, puis 0,36 ml de de tétraméthyléthylénediamine. Après une courte période d'induction, la température s'élève aux alentours de 30° C. Après 30 mn, on dilue avec de l'éther de pétrole. Les billes de polymère sont recueillies sur un Buchner recouvert par une toile de nylon (100 m), lavées abondamment successivement à l'éther de pétrole, à l'acétone, à l'acétone aqueuse (1 : 1), à l'eau, à l'éthanol et à l'éther, et finalement séchées sous vide sur P₂O₅ à la température ambiante. Rendement 90-95 %.en billes de résine (diamètre entre 0,1 et 0,2 mm). Charge identique à celle de l'exemple 1.

### II SYNTHESE ASYMETRIQUE D'ACIDES MINES

### Exemple 4

10 g de copolymère obtenu dans les exemples 1, 2 ou 3 à partir de (S)-prolinol et 2,9 g d'alaninate de t-butyle racémique dans 150 ml de toluène et quelques gouttes d'éthérate de trifluorure de bore sont chauffés à reflux en éliminant l'eau formée au moyen d'une trappe de Dean-Stark. La réaction terminée, on laisse revenir à la température ambiante et on filtre la résine qui est lavée au dichlorométhane, à l'éther et qui est séchée sous vide sur P₂O₅ à la température ambiante.

A une suspension agitée de la base de Schiff ainsi obtenue, dans 200ml de tétrahydrofuranne anhydre, on ajoute à la température ambiante une solution de diisopropylamidure de lithium (50 moles) dans 90 ml de tétrahydrofuranne. On porte 2 h à reflux, on refroidit jusqu'à 20° C, on ajoute 40 ml d'eau et on abandonne 2 h. La résine est alors filtrée et abondamment lavée successivement avec du tétrahydrofuranne, du dichlorométhane et de l'éther anhydre.

Une suspension de la résine précédente dans 200 ml d'acide chlorhydrique 1,5 N est agitée 4 h à la température ambiante. On filtre, lave avec 200 ml d'eau, on joint les filtrats et on concentre sous vide jusqu'à sec.

Le résidu de chlorhydrate d'aminoacide est agité 1 h avec 10 ml d'hexaméthyldisilazane. On filtre l'insoluble, on ajoute au filtrat 20 ml de méthanol ; après 10 mn, on évapore le solvant et on sèche le résidu de (R)-alanine sous vide. Rendement 95-97 % ; excès énantiomérique (déterminé par polarimétrie) 96-98 %.

La résine récupérée peut être recyclée après séchage.

### Exemple 5

La même opération que dans l'exemple 4 est réalisée avec un polymère préparé à partir de (R)-prolinol. La (S)-alanine est obtenue avec le même rendement chimique et la même énantiosélectivité.

### Exemple 6

Le même mode opératoire que dans l'exemple 4 est réalisé, mais la totalité de la réaction de déprotonation et de reprotonation est effectuée à - 78° C. La (R)-alanine est obtenue avec un ee = 61 %.

### Exemple 7

La même opération que dans l'exemple 4 est réalisée, mais à partir du (RS)-valinate de t-butyle. La (R)-valine est obtenue avec un rendement de 95-97 % et un ee = 98-99 %.

### Exemple 8

Même opération que dans l'exemple 4, mais la base de Schiff supportée est préparée à partir de glycinate de t-butyle. Après formation de l'énolate par action à 20° du diisopropylamidure de lithium dans le tétrahydrofuranne, on porte 2 h à reflux, on refroidit à 20°, on ajoute goutte à goutte 15 moles d'iodure de méthyle dans 10 ml de tétrahydrofuranne et on abandonne 2 h.

Après traitement comme indiqué dans l'exemple 4, on isole la (S)-alanine avec un rendement de 95-97 % et un ee = 98-99 %.

### Exemple 9

Même mode opératoire que dans l'exemple 8 en utilisant un copolymère préparé à partir du (R)-prolinol. On isole dans ces conditions la (R)-alanine avec le même rendement et la même énantiosélectivité que dans l'exemple 8.

### Exemple 10

Même mode opératoire que dans l'exemple 8, mais en évitant de porter l'énolate à reflux. La (S)-alanine est obtenue avec un ee = 82 %.

Dans chacun des procédés illustrés par les exemples ci-dessus, une dizaine de recyclages du polymère ont été mis en oeuvre sans perte de rendement ni d'énantiosélectivité.

Ainsi que cela ressort de ce qui précède, l'invention ne se limite nullement à ceux de ses modes de mise en oeuvre, de réalisation et d'application qui viennent d'être décrits de façon plus explicite ; elle en embrasse au contraire toutes les variantes qui peuvent venir à l'esprit du technicien en la matière, sans s'écarter du cadre, ni de la portée, de la présente invention.

### Exemple 11

La même opération que dans les exemples 4 et 7 est réalisée à partir du (RS)-phénylalaninate de t-butyle. La (R)-phénylalanine est obtenue avec un rendement de 95-97 % et un ee > 99 %.

### Exemple 12

La même opération que dans l'exemple 8 est réalisée, mais en remplaçant l'iodure de méthyle par l'iodure d'isopropyle.

Après traitement comme indiqué, on isole la (S)-valine avec un rendement de 95-97 % et un ee > 99 %.

### Exemple 13

La même opération que dans l'exemple 8 est réalisée, mais en remplaçant l'iodure de méthyle par le bromure de benzyle. On isole la (S)-phénylalinine avec un rendement de 95-97 % et un ee > 99 %.

### Exemple 14

La même opération que dans l'exemple 4 est réalisée, mais à partir du (S)-alaninate de t-butyle. La (R)-alanine est obtenue avec un rendement quantitatif et avec un ee > 99 %.

### Exemple 15

La même opération que dans l'exemple 4 est réalisée, mais en utilisant comme agent de maille le dérivé N-acryloylé de la (R)- -méthylbenzylamine. En utilisant 5 équivalents de L.D.A., la (R)-alanine est isolée avec un rendement de 95 % et un ee = 86 %. Le ee tombe à 37 % en employant 1 équivalent de LDA.

## Revendications

1. Polymère comportant :
- un motif chiral;
- un motif de fonctionnalisation ;
- un motif optionnel de réticulation ;
caractérisé par le fait que ledit motif chiral présente des sites susceptibles de former des liaisons hydrogènes avec un autre motif chiral et par le fait qu'au moins la moitié des motifs, exprimé en mole, sont des motifs chiraux.

2. Polymère selon la revendication 1 caractérisé par le fait qu'il est susceptibles d'être obtenu par copolymérisation radicalaire d'un monomère ou d'un oligomère ou d'un prépolymère chiral, d'un agent de fontionnalisation, et de préférence d'un agent de réticulation.

3. Polymère selon l'une des revendications 1 et 2 caractérisé par le fait que ledit motif chiral représente, exprimé en mole, un pourcentage au moins égal à 2/3.

4. Polymère selon l'une des revendications 1 à 3 pris séparément caractérisé par le fait qu'il est susceptible d'être obtenu par copolymérisation radicalaire d'un monomère chiral, d'un agent de réticulation et d'un agent de fonctionnalisation, caractérisé par le fait que :
- le monomère chiral est constitué par le N-acryloyl prolinol, soit sous la forme R, soit sous la forme S ;
- l'agent de réticulation est constitué par la bis-acryloyl-N, N' diméthyléthylènediamine ou par la bis-acryloyl piperazine ;
- l'agent de fonctionnalisation est constitué par la para-N-acryloyl-N-méthyl amino benzaldéhyde, et dans lequel un seul ou plusieurs des groupes acryloyles est éventuellement remplacé, soit dans la malle chirale, soit dans l'agent de fonctionnalisation, soit dans l'agent de réticulation, par un groupe méthacryloyle.

5. Procédé de synthèse asymétrique, caractérisé par le fait qu'il consiste à greffer un composé prochiral sur un support polymérique constitué au moins par une séquence d'un polymère comportant :
- un motif chiral
- un motif de fonctionnalisation
- un motif optionnel de réticulation
et à réaliser la réaction à une température supérieure à 0°C.

6. Procédé de synthèse asymétrique selon la revendication 5 caractérisé par le fait que ledit motif chiral représente , exprimé en mole, au moins 2/3.

7. Procédé de synthèse asymétrique selon la revendication 5, caractérisé par le fait que lorsque le motif chiral ne présente pas des sites susceptibles de faire des liaisons d'hydrogène intramoléculaires avec un autre motif chiral, ledit motif chiral représente, exprimé en mole, un pourcentage au moins égal à 70 %, avantageusement à 3/4.

8. Procédé de synthèse asymétrique selon les revendications 5 à 7, caractérisé par le fait que la synthèse asymétrique est effectuée à une température égale à l'ambiante et/ou une température obtenue par chauffage modéré.

9. Procédé de synthèse asymétrique selon les revendications 5 à 8, caractérisé par le fait que la synthèse asymétrique est effectuée à température de reflux du tétrahydrofuranne, à la fin de la première étape, pendant une durée de 15 mn à 4 h.

10. Procédé selon les revendications 5 à 9, caractérisé par le fait que ledit composé prochiral greffé sur un support polymérique est un compose optiquement actif et par le fait que la synthèse asymétrique est une inversion, ou le composé ainsi formé est soumis à un réactif connu pour inverser une configuration.

11. Procéde selon les revendications 5 à 9, caractérisé par le fait que ledit composé prochiral greffé sur un support polymérique est un composé au moins partiellement racémique et par le fait que la synthèse asymétrique est une déracémisation ou le composé ainsi formé est soumis à un réactif connu pour racémiser une configuration.

12. Procédé de synthèse asymétrique selon les revendications 5 à 11, caractérisé par le fait qu'il s'agit d'une synthèse asymétrique d'acides aminés et par le fait que consiste à partir d'un dérivé prochiral de formule générale : 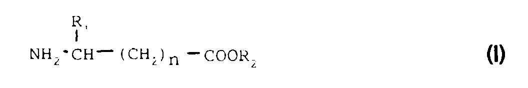 dans lequel n est égal à 0 ou 1,
R₁ représente un atome d'hydrogène, un groupe alkyle ou aralkyle, et
R₂ représente un groupe alkyle en C₁ à C₅ linéaire ou ramifié ou un groupe aryle, lequel dérivé est réversiblement ancré par formation d'une base de Schiff sur ledit polymère chiral et en ce que :
- dans une première étape, le dérivé lié au polymère chiral est déprotoné à température ambiante par une base forte dans un solvant aprotique de préférence le tétrahydrofuranne ;
- dans une deuxième étape, on procède, soit à l'alkylation, soit à la protonation du dérivé déprotoné lié au polymère chiral, de façon à créer un carbone asymétrique sur ledit dérivé et,
- dans une troisième étape, on hydrolyse la base de Schiff pour obtenir un acide aminé de formule générale : 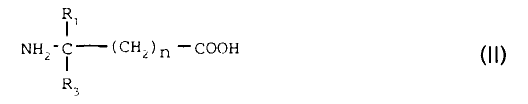
où R₁ et n sont tels que définis plus haut,
R₃ représente un groupe alkyle ou aralkyle,
R₁ et R₃ devant être différents.

13. Procédé de synthèse asymétrique sur support, d'acides aminés, selon la revendication 12, caractérisé par le fait que l'on procède à la protonation du dérivé déprotoné lié au polymère chiral, par addition d'eau, d'un alcool ou d'un acide minéral ou organique.

14. Procédé de synthèse asymétrique sur support, d'acides aminés, selon la revendication 12, caractérisé par le fait que l'on procède à l'alkylation du dérivé déprotoné lié au polymère chiral, par un halogénure de formule générale R₃ X, où X représente Cl, Br, ou I, et R₃ représente un groupe alkyle ou aralkyle.

15. Procédé de synthèse asymétrique sur support, d'acides aminés, selon la revendication 12, caractérisé par le fait que l'on procède à l'alkylation du dérivé déprotoné lié au polymère chiral, par des réactions d'addition-1-4, avec des esters acryliques, l'acrylonitrile ou l'acroléine..

16. Procédé de synthèse asymétrique sur support, selon la revendication 14, caractérisé par le fait que R₃ dans R₃-X est un groupe fonctionnalisé du type :
Z-(CH₂)ₙ-
dans lequel :
n = 1 à 4;
Z = I, CN, CO₂R⁴ (R⁴ = alkyle), OR⁵ (R⁵ = CH₃ tosyle, tétrahydropyranyle), Y-NH (Y = benzyloxycarbonyle, t-butyloxycarbonyle), R⁴S,

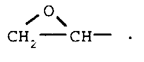

17. Procédé de synthèse asymétrique sur support, d'acides aminés, selon la revendication 12, caractérisé par le fait que l'on procède à l'alkylation du dérivé déprotoné lié au polymère chiral,
- par aldolisation ou cétolisation avec respectivement un aldéhyde de formule R⁶ CHO (R⁶ = alkyle, aryle ou aralkyle) et avec une cétone aliphatique ou arylaliphatique.

## Claims

1. Polymer comprising:
- a chiral unit;
- a functionalization unit;
- an optional crosslinking unit;
characterized in that the said chiral unit exhibits sites capable of forming hydrogen bonds with another chiral unit and in that at least half of the units, expressed as moles, are chiral units.

2. Polymer according to claim 1, characterized in that it can be obtained by radical copolymerization of a chiral monomer or oligomer or prepolymer, of a functionalization agent and preferably of a crosslinking agent.

3. Polymer according to either of claims 1 and 2, characterized in that the said chiral unit represents, expressed as moles, a percentage at least equal to 2/3.

4. Polymer according to one of claims 1 to 3 taken separately, characterized in that it can be obtained by radical copolymerization of a chiral monomer, of a crosslinking agent and of a functionalization agent, characterized in that:
- the chiral monomer consists of N-acryloylprolinol, either in the R form or in the S form;
- the crosslinking agent consists of bisacryloyl-N, N'-dimethylethylenediamine or of bisacryloylpiperazine;
- the functionalization agent consists of para(N-acryloyl-N-methylamino)benzaldehyde, and in which a single one or several of the acryloyl groups is optionally replaced, either in the chiral unit or in the functionalization agent or in the crosslinking agent, by a methacryloyl group.

5. Asymmetric synthesis process, characterized in that it consists in grafting a prochiral compound to a polymeric support composed at least of a sequence of a polymer comprising:
- a chiral unit;
- a functionalization unit;
- an optional crosslinking unit;
and in carrying out the reaction at a temperature greater than 0°C.

6. Asymmetric synthesis process according to claim 5, characterized in that the said chiral unit represents, expressed as moles, at least 2/3.

7. Asymmetric synthesis process according to claim 5, characterized in that, when the chiral unit does not exhibit sites capable of forming intramolecular hydrogen bonds with another chiral unit, the said chiral unit represents, expressed as moles, a percentage at least equal to 70%, advantageously to 3/4.

8. Asymmetric synthesis process according to claims 5 to 7, characterized in that the asymmetric synthesis is carried out at a temperature equal to room temperature and/or a temperature obtained by moderate heating.

9. Asymmetric synthesis process according to claims 5 to 8, characterized in that the asymmetric synthesis is carried out at the reflux temperature of tetrahydrofuran, at the end of the first stage, for a duration of 15 min to 4 h.

10. Process according to claims 5 to 9, characterized in that the said prochiral compound grafted to a polymeric support is an optically active compound and in that the asymmetric synthesis is an inversion or the compound thus formed is subjected to a reactant known for inverting a configuration.

11. Process according to claims 5 to 9, characterized in that the said prochiral compound grafted to a polymeric support is an at least partially racemic compound and in that the asymmetric synthesis is a deracemization or the compound thus formed is subjected to a reactant known for racemizing a configuration.

12. Asymmetric synthesis process according to claims 5 to 11, characterized in that it is an asymmetric synthesis of amino acids from a prochiral derivative of general formula: 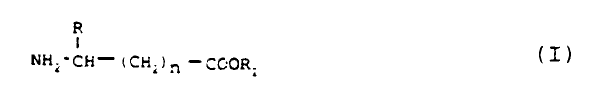 in which n is equal to 0 or 1,
R₁ represents a hydrogen atom or an alkyl or aralkyl group, and
R₂ represents a linear or branched C₁ to C₅ alkyl group or an aryl group,
which derivative is reversibly anchored by formation of a Schiff base to the said chiral polymer, and in that:
- in a first stage, the derivative bonded to the chiral polymer is deprotonated at room temperature by a strong base in an aprotic solvent, preferably tetrahydrofuran;
- in a second stage, the deprotonated derivative bonded to the chiral polymer is either alkylated or protonated, so as to create an asymmetric carbon on the said derivative, and,
- in a third stage, the Schiff base is hydrolysed in order to obtain an amino acid of general formula: 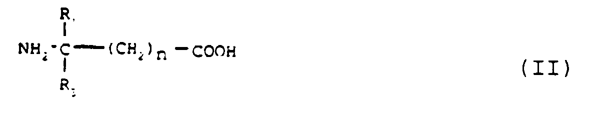
where R₁ and n are as defined above, R₃ represents an alkyl or aralkyl group, it being necessary for R₁ and R₃ to be different.

13. Asymmetric synthesis process on a support for amino acids according to claim 12, characterized in that the deprotonated derivative bonded to the chiral polymer is protonated by addition of water, of an alcohol or of an inorganic or organic acid.

14. Asymmetric synthesis process on a support for amino acids according to claim 12, characterized in that the deprotonated derivative bonded to the chiral polymer is alkylated by a halide of general formula R₃X, where X represents Cl, Br or I and R₃ represents an alkyl or aralkyl group.

15. Asymmetric synthesis process on a support for amino acids according to claim 12, characterized in that the deprotonated derivative bonded to the chiral polymer is alkylated by 1,4-addition reactions with acrylic esters, acrylonitrile or acrolein.

16. Asymmetric synthesis process on a support according to claim 14, characterized in that R₃ in R₃-X is a functionalized group of the type:
Z-(CH₂)ₙ-
in which:
n = 1 to 4;
Z = I, CN, CO₂R⁴ (R⁴ = alkyl), OR⁵ (R⁵ = CH₃, tosyl or tetrahydropyranyl), Y-NH, (Y = benzyloxycarbonyl or t-butyloxycarbonyl), R⁴S or

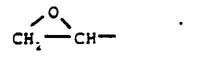

17. Asymmetric synthesis process on a support for amino acids according to claim 12, characterized in that the deprotonated derivative bonded to the chiral polymer is alkylated,
- by aldolization or ketolization with respectively an aldehyde of formula R⁶CHO (R⁶ = alkyl, aryl or aralkyl) and with an aliphatic or arylaliphatic ketone.

## Patentansprüche

1. Polymer enthaltend
- ein chirales Element;
- ein Funktionalisierungselement;
- gegebenenfalls ein vernetzendes Element;
dadurch gekennzeichnet, daß das chirale Element Stellen besitzt, die Wasserstoffbrückenbindungen mit einem anderen chiralen Element eingehen können sowie dadurch, daß mindestens die Hälfte der Elemente, ausgedrückt in Mol, chirale Elemente sind.

2. Polymer nach Anspruch 1, dadurch gekennzeichnet, daß es durch radikalische Copolymerisation eines chiralen Monomeren oder Oligomeren oder Präpolymeren, eines Funktionalisierungsmittels und vorzugsweise eines vernetzenden Mittels erhalten werden kann.

3. Polymer nach einem der Ansprüche 1 und 2, dadurch gekennzeichnet, daß das chirale Element, ausgedrückt in Mol, einen Prozentanteil von wenigstens 2/3 darstellt.

4. Polymer nach einem der Ansprüche 1 bis 3, jeweils für sich genommen, dadurch gekennzeichnet, daß es durch radikalische Copolymerisation eines chiralen Monomeren oder Oligomeren oder Präpolymeren, eines Funktionalisierungsmittels und vorzugsweise eines vernetzenden Mittels erhältlich ist, dadurch gekennzeichnet, daß:
- das chirale Monomere aus N-Acryloylprolin besteht, entweder in der R-oder in der S-Form;
- das vernetzende Mittel aus Bis-acryloyl-N,N'-dimethylethylendiamin oder Bis-acryloyl-piperazin besteht;
- das funktionalisierende Mittel aus para-N-Acryloyl-N-methylaminobenzaldehyd besteht, und in dem eventuell eine oder mehrere der Acryloylgruppen entweder im chiralen Kettenbaustein oder im funktionalisierten oder vernetzenden Mittel durch eine Methacryloylgruppe ersetzt sind.

5. Verfahren zur asymmetrischen Synthese, dadurch gekennzeichnet, daß es darin besteht, eine prochirale Verbindung auf einen polymeren Träger zu pfropfen, der aus wenigstens einer Sequenz eines Polymeren besteht, die umfaßt:
- ein chirales Element;
- ein funktionalisierendes Element;
- gegebenenfalls ein vernetzendes Element;
und die Umsetzung bei einer Temperatur oberhalb von 0 °C vorzunehmen.

6. Verfahren zur asymmetrischen Synthese nach Anspruch 5, dadurch gekennzeichnet, daß das chirale Element, ausgedrückt in Mol, wenigstens 2/3 darstellt.

7. Verfahren zur asymmetrischen Synthese nach Anspruch 5, dadurch gekennzeichnet, daß, wenn das chirale Element keine Stellen aufweist, die in der Lage sind, interne Wasserstoffbrückenbindungen mit einem anderen chiralen Element einzugehen, dieses chirale Element, ausgedrückt in Mol, einen Prozentanteil von wenigstens 70 %, vorteilhaft wenigstens 3/4 darstellt.

8. Verfahren zur asymmetrischen Synthese nach den Ansprüchen 5 bis 7, dadurch gekennzeichnet, daß die asymmetrische Synthese bei einer der Raumtemperatur entsprechenden oder durch mäßiges Erwärmen erhaltenen Temperatur ausgeführt wird.

9. Verfahren zur asymmetrischen Synthese nach den Ansprüchen 5 bis 8, dadurch gekennzeichnet, daß die asymmetrische Synthese am Ende des ersten Verfahrensschritts bei Rückflußtemperatur des Tetrahydrofurans während einer Dauer von 15 min bis 4 h ausgeführt wird.

10. Verfahren nach den Ansprüchen 5 bis 9, dadurch gekennzeichnet, daß die auf einen polymeren Träger gepfropfte prochirale Verbindung eine optisch aktive Verbindung ist und dadurch, daß die asymmetrische Synthese eine Inversion ist, oder die so gebildete Verbindung einem bekannten Mittel, um eine Konfiguration zu invertieren, unterworfen wird.

11. Verfahren nach den Ansprüchen 5 bis 9, dadurch gekennzeichnet, daß die auf einen polymeren Träger gepfropfte prochirale Verbindung eine mindestens teilweise racemische Verbindung ist und dadurch, daß die asymmetrische Synthese eine Entracemisierung darstellt, oder daß die so gebildete Verbindung einem bekannten Mittel, um eine Konfiguration zu racemisieren, unterworfen wird.

12. Verfahren zur asymmetrischen Synthese nach den Ansprüchen 5 bis 11, dadurch gekennzeichnet, daß es sich um eine asymmetrische Synthese von Aminosäuren handelt und dadurch, daß es darin besteht, auszugehen von einem prochiralen Derivat der allgemeinen Formel: 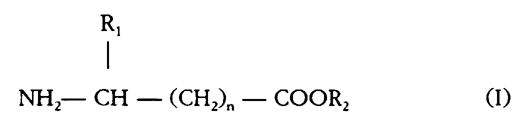 in der n gleich 0 oder 1 ist,
R₁ ein Wasserstoffatom, eine Alkyl- oder Aralkylgruppe ist und
R₂ für eine lineare oder verzweigte C₁- bis C₅-Alkylgruppe oder eine Arylgruppe steht, das Derivat auf dem Polymeren durch Bildung einer Schiffschen Base reversibel verankert ist und dadurch, daß:
- in einem ersten Schritt, das an das chirale Polymere gebundene Derivat bei Raumtemperatur mittels einer starken Base in einem aprotischen Lösungsmittel, vorzugsweise Tetrahydrofuran entprotoniert wird;
- in einem zweiten Schritt, man entweder zur Alkylierung oder zur Protonierung des entprotonierten, an das chirale Polymere gebundenen Derivats gelangt, derart, daß ein asymmetrisches Kohlenstoffatom auf diesem Derivat entsteht und,
- in einem dritten Schritt, man die Schiff'sche Base hydrolysiert, um eine Aminosäure der allgemeinen Formel zu erhalten: 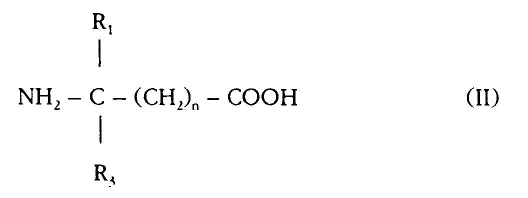 in der R₁ und n wie oben definiert sind, R₃ für eine Alkyl- oder Aralkylgruppe steht, wobei R₁ und R₃ verschieden sein müssen.

13. Verfahren zur asymmetrischen Synthese von Aminosäuren auf einem Träger nach Anspruch 12, dadurch gekennzeichnet, daß man zur Protonierung des an das chirale Polymere gebundenen entprotonierten Derivats durch Zusatz von Wasser, eines Alkohols oder einer organischen oder Mineralsäure gelangt.

14. Verfahren zur asymmetrischen Synthese von Aminosäuren auf einem Träger nach Anspruch 12, dadurch gekennzeichnet, daß man zur Alkylierung des an das chirale Polymere gebundenen entprotonierten Derivats durch ein Halogenid der allgemeinen Formel R₃-X gelangt, in der X für Cl, Br oder I und R₃ für eine Alkyl- oder Aralkylgruppe steht.

15. Verfahren zur asymmetrischen Synthese von Aminosäuren auf einem Träger nach Anspruch 12, dadurch gekennzeichnet, daß man zur Alkylierung des an das chirale Polymere gebundenen entprotonierten Derivats durch 1,4-Anlagerungsreaktionen mit Acrylestern, Acrylnitril oder Acrolein gelangt.

16. Verfahren zur asymmetrischen Synthese auf einem Träger nach Anspruch 14, dadurch gekennzeichnet, daß R₃ in R₃-X eine funktionalisierte Gruppe des Typs
Z - (CH₂)ₙ
- ist in dem:
n = 1 bis 4;
Z = I, CN, CO₂R⁴ (R⁴ = Alkyl), OR⁵ (R, = CH₃, Tosyl, Tetrahydropyranyl), Y-NH (Y = Benzyloxycarbonyl, t-Butyloxycarbonyl), R⁴S,

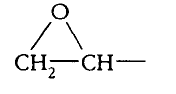

17. Verfahren zur asymmetrischen Synthese von Aminosäuren auf einem Träger nach Anspruch 12, dadurch gekennzeichnet, daß man zur Alkylierung des entprotonierten, an das chirale Polymere gebundenen Derivats gelangt,
- durch Aldolisierung oder Ketalisierung mit einem Aldehyd der Formel R⁶CHO (R⁶ = Alkyl, Aryl oder Aralkyl) bzw. einem aliphatischen oder aryliphatischen Keton.
